# EUROPÄISCHE PATENTSCHRIFT

(11) **EP 2 499 389 B1**
(45) Veröffentlichungstag und Bekanntmachung des Hinweises auf die Patenterteilung: **10.01.2018**
(21) Anmeldenummer: 10779308.5
(22) Anmeldetag: 12.11.2010
(51) Int. Cl.: F16D 3/26

(54) **GLEITSTEIN FÜR EINE GELENKSPINDEL**
SLIDING BLOCK FOR AN ARTICULATED SPINDLE
COULISSEAU POUR UNE BROCHE ARTICULÉE

(30) Priorität: 13.11.2009 DE 102009053129
(43) Veröffentlichungstag der Anmeldung: 19.09.2012
(73) Patentinhaber: SMS group GmbH, 40237 Düsseldorf (DE)
(72) Erfinder: GRIMMEL, Rüdiger, 57250 Netphen (DE); SUNDERMANN, Christoph, 57271 Hilchenbach (DE); GEHLE, Ralf, 57368 Lennestadt (DE)
(74) Vertreter: Klüppel, Walter
(86) Internationale Anmeldenummer: PCT/EP2010/067373
(87) Internationale Veröffentlichungsnummer: WO 2011/058133

(56) Entgegenhaltungen:
- DE-A1- 2 251 919
- FR-A- 624 874
- GB-A- 262 144
- GB-A- 284 462
- US-A- 1 532 752
- US-A- 2 305 699
- US-A- 2 361 629
- US-A- 3 070 978
- US-A- 3 469 416

## Beschreibung

Die Erfindung bezieht sich auf eine insbesondere in einem Antrieb eines Walzwerks angeordnete Gelenkspindel, die zur Herstellung einer Verbindung mit einem Gelenkkopf einen Treffer oder zur Herstellung einer Verbindung mit einem Treffer einen Gelenkkopf aufweist, dessen Zunge in eine quer zur Drehachse liegende zylindrische Öffnung des Gelenkkopfs eingreift, zwischen dem und der Zunge ein Gleitstein angeordnet ist, der durch zwei in Teilbereichen Rotationskörperkonturen aufweisende Gleitkörper gebildet wird, die drehbar in einer an die Form der Gleitkörper angepassten rotationskörperförmigen Ausnehmung in dem Gelenk so angeordnet sind, dass sie eine Schwenkbewegung im Gelenkkopf ausführen können.

Gleitsteine, die auch als Gelenkstein bezeichnet werden, sind bekannt. Der Gleitstein besteht aus einem nicht-metallischen oder metallischen Werkstoff und wird bei Gelenkspindeln und Gelenkkupplungsköpfen von Walzwerksantrieben eingesetzt. Beim Einsatz eines Gelenksteins in den beiderseitigen Köpfen der Gelenkspindeln oder in den anschließenden Kupplungsköpfen wirkt ein Flachzapfen der Spindel oder des Kopfes mit dem Gelenkstein zusammen. Der Zweck der Gelenksteine liegt im wesentlichen darin, einen Längen- und Richtungsausgleich zwischen den in ihrer Achsrichtung in gewissen Grenzen zueinander veränderlichen Gelenkspindeln und den starr angeordneten Kupplungselementen am Kammwalzen- und Walzgerüst zu vermitteln. Hierbei kommt dem Gelenk- oder Gleitstein neben der Übertragung der hohen Drehmomente und der stoßartigen Beanspruchungen, wie sie beim Anfahren der Gerüste und vor allen Dingen in sehr kurzen zeitlichen Folgen beim Anstich des Walzgutes in den Arbeitswalzen auftreten, noch die weitere Aufgabe zu, zusätzliche Relativbewegungen unter starken Flächenpressungen aufzunehmen.

Diese verschiedenartigen, sich vielfach überlagernden Beanspruchungen führen zu einem verhältnismäßig raschen und ausgeprägten Verschleiß. Obwohl stets versucht wurde, durch Verwendung immer besser geeigneter neuartiger Materialien, beispielsweise durch den Einsatz neuer Werkstoffe, die Haltbarkeit der Gelenksteine zu erhöhen, ist trotzdem bislang infolge des Verschleißes eine sehr häufige Erneuerung der Gleitsteine erforderlich.

Neben den Ersatzteilkosten und der damit verbundenen Lagerhaltung und vor allem die durch das Auswechseln der Gleitsteine verursachten Stillstands- und Montagezeiten außerordentlich hoch, da es bei der Auswechslung der Gleitsteine zumeist einer völligen Trennung der Gelenkspindeln von den anschließenden Kupplungselementen bedarf. Bei den kostenintensiven Walzwerksanlagen sind die durch Reparaturen anfallenden Stillstands- und Montagezeiten, insbesondere, wenn diese außerplanmäßig auftreten, eine außerordentlich hohe Belastung.

Aus der DE 26 56 257 A1 ist zur Senkung dieser Materialkosten und vor allem zur Reduzierung des Materialaufwands ein Gleit- oder Gelenkstein für Gelenkspindeln und Gelenkkupplungsköpfe von Walzwerksantrieben bekannt, der aus mehreren Teilabschnitten besteht. Dabei sind die Teilungsebenen für die Teilabschnitte in Querrichtung zur Längsachse des Gelenksteins vorgesehen.

Aus der GB 262 144 ist eine Gelenkspindel bekannt, die eine Verbindung mit einem Gelenkkopf oder mit einem Treffer herstellt. Hierbei kommen Gleitsteine zum Einsatz, die die Form eines Kegelstumpfes aufweisen.

In der GB 284 462 wird eine Gelenkverbindung zwischen einem Nocken und einer Welle beschrieben, in der Elemente mit Zylinderoberflächen verwendet werden.

Aus US 2,361,629 ist ein Gleitstein zur Verbindung eines Gelenkkopfes mit einem Treffer bekannt, wobei der Gleitstein jeweils zwei Gleitkörper mit zylinderförmigen Oberflächenkonturen bzw. zylindrischen Mantelwandstücken aufweist.

Ferner geht aus der WO 2004/072501 ein Gleitstein für Gelenkspindeln an Antrieben von Walzwerken hervor, der eine hohe Flächenpressung zulässt und darüber hinaus auch eine hohe Warmfestigkeit besitzt. Hierbei weist die Gelenkspindel einen Treffer mit einem Flachzapfen auf, dessen Zunge in eine quer zur Drehachse liegende zylindrische Öffnung des Spindelkopfes eingreift, zwischen dem und dem Flachzapfen der Spindelkopf der Gleitstein angeordnet ist. Dieser Gleitstein ist in Verbundbauweise ausgebildet und weist einen metallischen Innenkörper und eine diesen ummantelnde Außenschicht aus Polymerfasermaterial auf.

Der Stand der Technik insbesondere nach US 2,361,629 wird durch Figur 1 und 2 dargestellt. Figur 1 zeigt in Explosionsdarstellung einen mit einer Zunge 1 ausgestatteten Treffer 2 zur Verbindung mit einer Gelenkspindel 3.

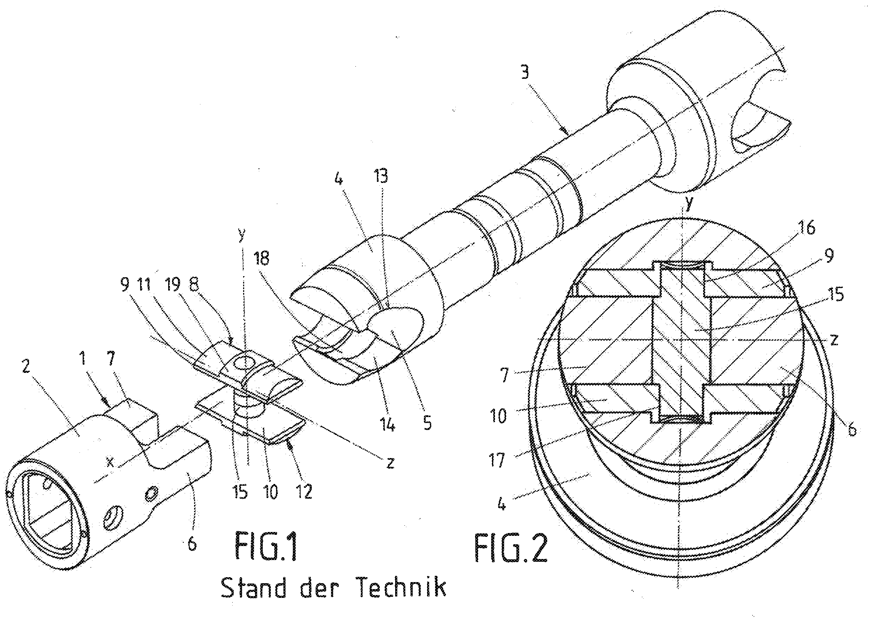

Figur 2 stellt eine senkrechte Schnittansicht aus Figur 1 gemäß einer Schnittlinie II - II dar.

Die Gelenkspindel 3 hat einen Gelenkkopf 4, der mit einer Ausnehmung 5 zur Aufnahme der Zunge 1 ausgestattet ist. Die Zunge 1 besteht aus zwei vorspringenden, ein fingerförmiges Flachblatt bildenden Elementen 6, 7 mit einer der Außenseite des Treffers 1 zugewandten zylindrischen und einer der Innenseite des Treffers 1 zugewandten quaderförmigen Kontur. Auf die Elemente 6, 7 ist ein Gleitstein 8 mit zwei Gleitplatten 9, 10 befestigt. Die Gleitplatten 9, 10 haben in der Ausnehmung 5 anliegende zylindrische Oberflächen 11, 12, die es ermöglichen, dass der Gleitstein 8 und die Gelenkspindel senkrecht zur Längsachse x der Gelenkspindel 3 um eine Achse z verdrehbar oder verschwenkbar sind. Die Oberflächen 11, 12 sind so ausgeführt, dass sie in entsprechende Konturen 13, 14 innerhalb der Ausnehmung 5 im Gelenkkopf 4 der Gelenkspindel 3 hineinpassen.

Die Gelenksteine oder Gleitplatten 9, 10 sind durch einen Bolzen 15 miteinander verbunden, der in die von den Elementen 6, 7 gebildete Trefferausnehmung hineinragt und der im Allgemeinen in einer Bohrung 16 bzw. 17 in den Gleitsteinen 9 bzw. 10 geführt ist. Die Relativbewegung zwischen dem Gelenkkopf 4 und dem Treffer 2 wird durch die Rotation des Gleitsteins 8 und durch eine Schwenkbewegung der Elemente 6, 7 vollzogen. Die Gleitplatten 9, 10 müssen durch einen Anschlag geführt werden, um ein Verrutschen der Gleitplatten 9, 10 in Richtung der z-Achse zu verhindern. Standardmäßig wird hierzu in der Mitte des Gelenkkopfs 4 eine zylinderförmige Nut 18 angebracht, in der die Gleitplatten 9, 10 mit einer Führungsnocke 19 eingesetzt sind.

Es hat sich in der Vergangenheit gezeigt, dass es durch die Leistungssteigerung der Walzanlage an diesen Führungsnuten zu Spannungsrissen kommt.

Es ist die Aufgabe der Erfindung, eine Gelenkspindel der eingangs genannten Art so zu verbessern, dass ihre Leistungsfähigkeit bei der Übertragung von Drehmomenten erhöht wird.

Gemäß der Erfindung wird diese Aufgabe bei einer Gelenkspindel der eingangs genannten Art dadurch gelöst, dass die Rotationskörperkonturen der Gleitkörper konkav oder konvex ausgeführt sind und die Ausnehmung des Gelenkkopfes entsprechend konvex bzw. konkav ausgebildet ist. Die Rotationskörperkonturen der Gleitkörper sind hierbei gleichförmig ballig ausgebildet, nämlich sowohl in Richtung der Querachse der Gleitplatten als auch in Richtung der Drehachse der Gelenkspindel.

Durch die Erfindung wird das Entstehen von Spannungsrissen verhindert, ohne dass besondere Maßnahmen wie Ausrundungen, Polieren der Radien oder Verfestigen der Radien getroffen werden müssen. Durch die Erfindung wird eine grundsätzliche Lösung für ein reduziertes Spannungsniveau im Gelenkkopf geschaffen, ohne dass die erforderlichen Führungseigenschaften verloren gehen. Anstelle der Führungsnut kommt eine in zwei Richtungen symmetrisch zur y-Achse verlaufende gleichförmige ballige Kontur zum Einsatz, die der gesamten Gleitplattenquerachse, der z-Achse, überlagert ist.

Vorteilhafte Weiterbildungen der Erfindung ergeben sich aus den Unteransprüchen, der Beschreibung und den Zeichnungen.

Von Vorteil ist es insbesondere, wenn die Rotationskörperkonturen in den Teilbereichen die Form eines Fasses bzw. die Form eines einschaligen Hyperboloids haben.

Die Fassform lässt sich durch die Drehung einer Kurve mit sphärischer, elliptischer oder parabolischer Krümmung erzeugen. Durch die Krümmung kann der Verlauf der Kurve bei notwendiger Querführung des Gleitsteins an den optimalen Spannungszustand angepasst werden. Ein Sonderfall ist eine einen Kreisbogenabschnitt bildende Kurve des Fasses; hierbei kann je nach Ausführung das Spiel der Gelenke reduziert oder vergrößert werden.

Vorzugsweise lässt sich auch vorsehen, dass der Gleitstein in Bezug auf die ihn aufnehmende Ausnehmung unter Spannung steht.

Mit Vorteil wird die Gelenkspindel im Bereich des Gelenkkopfs so ausgestaltet, dass die Spannung durch die Formen der Rotationskörperkonturen des Gleitsteins einerseits und der Ausnehmung andererseits im Verhältnis zueinander bestimmt wird.

Die Gelenkspindel ist nach einer besonders vorteilhaften Ausführungsform dadurch gekennzeichnet, dass sich die Spannung des Gleitsteins durch ein den Abstand der beiden Gleitkörper zueinander einstellendes Einstellmittel, insbesondere einen Einstellbolzen, gegenüber der Ausnehmung einstellen lässt.

Die Erfindung bezieht sich auch auf den Gleitstein zum Einsatz in einer Gelenkspindel, wie oben näher beschrieben.

Nachstehend wird die Erfindung in zwei Ausführungsbeispielen näher erläutert. Es zeigen:
- Fig.: 3 eine perspektivische Explosionsansicht einer erfindungsgemäßen Gelenkspindel mit fassförmig ausgestalteten Gleitsteinen,
- Fig. 4: eine senkrechte Schnittansicht aus Figur 3 gemäß einer Schnittlinie IV - IV,
- Fig. 5: eine perspektivische Explosionsansicht einer erfindungsgemäßen Gelenkspindel mit Gleitsteinen in der Form eines einschaligen Hyperboloids und
- Fig. 6: eine senkrechte Schnittansicht aus Fig. 5 gemäß einer Schnittlinie V - V.

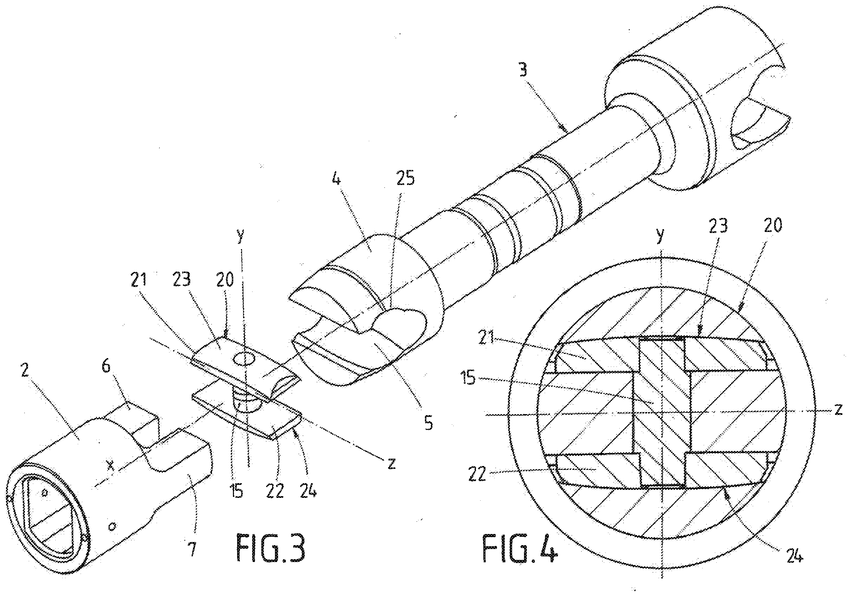

Ein Treffer 2 (Fig. 3, 4) mit zwei Fingern 6, 7 wirkt in aus dem Stand der Technik bekannter Weise (vgl. Fig. 1, 2) mit dem Gelenkkopf 4 einer Spindel 3 zusammen. Im Unterschied zum Stand der Technik ist ein Gleitstein 20 mit zwei Gleitplatten 21, 22 ausgestattet, die jeweils fassförmige Oberflächen 23, 24 aufweisen. Wie aus dem Stand der Technik bekannt, sind auch die beiden Gleitplatten 21, 22 durch einen Bolzen 15 miteinander verbunden. Im Unterschied zum Stand der Technik ist in der Ausnehmung 5 des Gelenkkopfs 4 der Spindel 3 keine Führungsnut 18 erforderlich und ebenso wenig eine Führungsnocke 19.

Vielmehr ist es ausreichend und erforderlich, dass die Ausnehmung eine an die konvexen Oberflächen 23, 24 genau angepasste konkave Kontur 25 mit wenigstens im wesentlichen derselben Krümmung wie die Oberflächen 23, 24 hat.

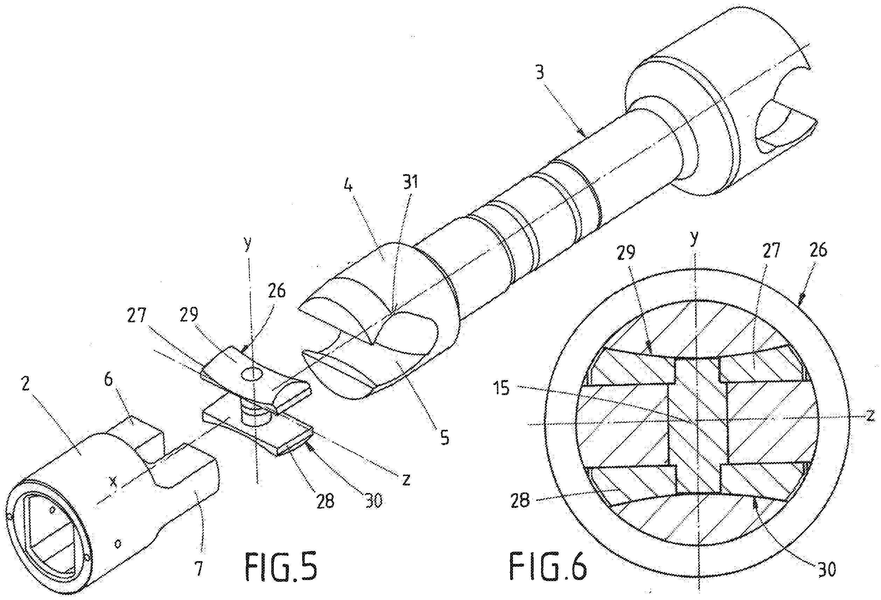

In einem weiteren Ausführungsbeispiel (Fig. 5, 6) der Erfindung weist ein Gleitstein 26 zwei Gleitplatten 27, 28 auf, die jeweils mit Oberflächen 29, 30 als Ausschnitte eines einschaligen Hyperboloids ausgestaltet sind. Auch in diesem Fall sind die beiden Gleitplatten 27, 28 durch einen Bolzen 15 miteinander verbunden. Wie im Fall des ersten Ausführungsbeispiels ist in der Ausnehmung 5 des Gelenkkopfs 4 der Spindel 3 keine Führungsnut 18 erforderlich und ebenso wenig eine Führungsnocke 19.

Vielmehr ist es auch hier ausreichend und erforderlich, dass die Ausnehmung eine an die konkaven Oberflächen 29, 30 genau angepasste konvexe Kontur 31 mit wenigstens im wesentlichen derselben Krümmung wie die Oberflächen 29, 30 hat.

In den durch die Erfindung geschaffenen Ausgestaltungen der Gleitsteine 20, 26 ist durch die Form der Oberflächen 23, 24 bzw. 29, 30 dafür Sorge getragen, dass die Gleitsteine 20, 26 selbstzentrierend in den Konturen 25, 31 gelagert sind und gleichzeitig Führungsnocken und Führungsnuten, wie sie beim Stand der Technik erforderlich sind, entfallen können.

### Bezugszeichenliste

- 1: Zunge
- 2: Treffer
- 3: Gelenkspindel
- 4: Gelenkkopf
- 5: Ausnehmung
- 6: Element
- 7: Element
- 8: Gleitstein
- 9: Gleitplatte
- 10: Gleitplatte
- 11: zylindrische Oberfläche
- 12: zylindrische Oberfläche
- 13: Kontur
- 14: Kontur
- 15: Bolzen
- 16: Bohrung
- 17: Bohrung
- 18: Nut
- 19: Führungsnocke
- 20: Gleitstein
- 21: Gleitplatte
- 22: Gleitplatte
- 23: Oberfläche
- 24: Oberfläche
- 25: Kontur
- 26: Gleitstein
- 27: Gleitplatte
- 28: Gleitplatte
- 29: Oberfläche
- 30: Oberfläche
- 31: Kontur

## Patentansprüche

1. Gelenkspindel (3), die in einem Antrieb eines Walzwerks anordenbar ist und zur Herstellung einer Verbindung mit einem Gelenkkopf einen Treffer oder zur Herstellung einer Verbindung mit einem Treffer (2) einen Gelenkkopf (4) aufweist, wobei die Zunge (1) des Treffers (2) in eine quer (z) zur Drehachse (x) liegende zylindrische Ausnehmung (5) des Gelenkkopfs (4) eingreift, zwischen dem und der Zunge (1) ein Gleitstein (20; 26) angeordnet ist, der durch zwei in Teilbereichen Rotationskörperkonturen (23, 24; 29, 30) aufweisende Gleitkörper (21, 22; 27, 28) gebildet wird, die um eine Querachse (z) drehbar in einer an die Form der Gleitkörper (21, 22; 27, 28) angepassten rotationskörperförmigen Kontur (25, 31) der Ausnehmung (5) in dem Gelenk so angeordnet sind, dass sie eine Schwenkbewegung im Gelenkkopf (4) ausführen können,
**dadurch gekennzeichnet,**
**dass** die Rotationskörperkonturen (23, 24; 29, 30) der Gleitkörper (21, 22; 27, 28) sowohl in Richtung der Gleitplattenquerachse (z) als auch in Richtung der Drehachse (x) gleichförmig ballig und jeweils konkav oder konvex ausgeführt sind und symmetrisch zur y-Achse verlaufen, wobei die Kontur (25, 31) der Ausnehmung (5) des Gelenkkopfes (4) entsprechend konvex bzw. konkav ausgebildet ist, so dass der Gleitstein (20; 26) selbstzentrierend in der Kontur (25, 31) der Ausnehmung (5) des Gelenkkopfes (4) gelagert ist.

2. Gelenkspindel (3) nach Anspruch 1,
**dadurch gekennzeichnet,**
**dass** die Rotationskörperkonturen (23, 24; 29, 30) in den Teilbereichen die Form eines Fasses bzw. die Form eines einschaligen Hyperboloids haben.

3. Gelenkspindel (3) nach Anspruch 2,
**dadurch gekennzeichnet,**
**dass** die Form des Fasses durch die Drehung einer Kurve mit sphärischer, elliptischer oder parabolischer Krümmung erzeugt ist.

4. Gelenkspindel (3) nach einem der Ansprüche 1 bis 3,
**dadurch gekennzeichnet,**
**dass** der Gleitstein (20, 26) in Bezug auf die ihn aufnehmende Kontur (25, 31) der Ausnehmung (5) unter Spannung steht.

5. Gelenkspindel (3) nach Anspruch 4,
**dadurch gekennzeichnet,**
**dass** die Spannung durch die Formen der Rotationskörperkonturen (23, 24; 29, 30) des Gleitsteins (20, 26) einerseits und der Kontur (25, 31) der Ausnehmung (5) andererseits im Verhältnis zueinander bestimmt wird.

6. Gelenkspindel (3) nach Anspruch 4 oder 5,
**dadurch gekennzeichnet,**
**dass** die Spannung des Gleitsteins (20, 26) durch ein den Abstand der beiden Gleitkörper (21, 22; 27, 28) zueinander einstellendes Einstellmittel, insbesondere einen Einstellbolzen (15), gegenüber der Kontur (25, 31) der Ausnehmung (5) einstellbar ist.

7. Gleitstein (20, 26) zum Einsatz in einer Gelenkspindel (3) nach einem der Ansprüche 1 bis 6.

## Claims

1. Articulated spindle (3), which can be arranged in a drive of a rolling mill and comprises a coupler for producing connection with a joint head or a joint head (4) for producing a connection with a coupler (2), wherein the tongue (1) of the coupler (2) engages in a cylindrical recess (5), which lies transversely (z) to the axis (x) of rotation, of the joint head (4), between which and the tongue (1) is arranged a sliding block (20; 26) which is formed by two slide bodies (21, 22; 27, 28), which have body-of-rotation contours (23, 24; 29, 30) in sub-regions and which are so arranged in a contour (25, 31), which is adapted to the shape of the slide bodies (21, 22; 27, 28) and which has the form of a body-of-rotation, of the recess (5) in the joint to be rotatable about a transverse axis (z) that the sliding bodies can execute a pivot movement in the joint head (4), **characterised in that** the body-of-rotation contours (23, 24; 29, 30) of the slide bodies (21, 22; 27, 28) are formed to be uniformly spherical in both the direction of the slide plate transverse axis (z) and the direction of the axis (x) of rotation and to be respectively concave or convex and extend symmetrically to the y axis, wherein the contour (25, 31) of the recess (5) of the joint head (4) is formed to be correspondingly convex or concave so that the sliding block (20; 26) is mounted in the contour (25, 31) of the recess (5) of the joint head (4) to be self-centring.

2. Articulated spindle (3) according to claim 1, **characterised in that** the body-of-rotation contours (23, 24; 29, 30) have in the sub-regions the shape of a barrel or the shape of a one-sheet hyperboloid.

3. Articulated spindle (3) according to claim 2, **characterised in that** the shape of the barrel is generated by rotation of a curve with spherical, elliptical or parabolic curvature.

4. Articulated spindle (3) according to any one of claims 1 to 3, **characterised in that** the sliding block (20, 26) is disposed under stress with respect to the contour (25, 31), which receives it, of the recess (5).

5. Articulated spindle (3) according to claim 4, **characterised in that** the stress is determined by the shapes of the body-of-rotation contours (23, 24; 29, 30) of the sliding block (20, 26) on the one hand and the contour (25, 31) of the recess (5) on the other hand in relation to one another.

6. Articulated spindle (3) according to claim 4 or 5, **characterised in that** the stress of the sliding block (20, 26) relative to the contour (25, 31) of the recess (5) is settable by setting means, particularly a setting pin (15), setting the spacing of the two slide bodies (21, 22; 27, 28) from one another.

7. Sliding block (20, 26) for use in an articulated spindle (3) according to any one of claims 1 to 6.

## Revendications

1. Broche articulée (3) qui peut venir se disposer dans une commande d'un laminoir et présente un élément de jonction pour la réalisation d'une liaison à une tête articulée ou une tête articulée (4) pour la réalisation d'une liaison à un élément de jonction (2), dans laquelle la languette (1) de l'élément de jonction (2) vient s'engrener dans un évidement cylindrique (5) de la tête articulée (4) disposé en direction transversale (z) par rapport à l'axe de rotation (x), un patin (20 ; 26) étant disposé entre la tête articulée et la languette (1), patin qui est formé par deux corps de glissement (21, 22; 27, 28) présentant des profils de corps de rotation (23, 24 ; 29, 30) dans des zones partielles, les corps de glissement étant disposés en rotation autour d'un axe transversal (z) dans l'articulation dans un profil (25, 31) de l'évidement (5) en forme de corps de rotation épousant la forme des corps de glissement (21, 22 ; 27, 28), d'une manière telle qu'ils peuvent mettre en oeuvre un mouvement de pivotement dans la tête articulée (4), **caractérisée en ce que** les profils de corps de rotation (23, 24 ; 29, 30) des corps de glissement (21, 22 ; 27, 28) sont réalisés de manière uniformément bombée aussi bien dans la direction de l'axe transversal (z) des plaques de glissement que dans la direction de l'axe de rotation (x), et de manière respective sous une forme concave ou convexe et s'étendent symétriquement par rapport à l'axe y, le profil (25, 31) de l'évidement (5) de la tête articulée (4) étant réalisé de manière correspondante sous une forme convexe, respectivement concave, d'une manière telle que le patin (20, 26) est monté de manière autocentrante dans le profil (25, 31) de l'évidement (5) de la tête articulée (4).

2. Broche articulée (3) selon la revendication 1, **caractérisée en ce que** les profils de corps de rotation (23, 24 ; 29 30) possèdent, dans les zones partielles, la forme d'un tonneau, respectivement la forme d'un hyperboloïde à une nappe.

3. Broche articulée (3) selon la revendication 2, **caractérisée en ce que** la forme du tonneau est obtenue via la rotation d'une courbe possédant une courbure sphérique, elliptique ou parabolique.

4. Broche articulée (3) selon l'une quelconque des revendications 1 à 3, **caractérisée en ce que** le patin (20, 26) est mis sous tension par rapport au profil (25, 31) de l'évidement (5) dans lequel il est logé.

5. Broche articulée (3) selon la revendication 4, **caractérisée en ce que** la tension est déterminée par les formes des profils de corps de rotation (23, 24 ; 29 30) du patin (20, 26) d'une part et du profil (25, 31) de l'évidement (5) d'autre part, l'une par rapport à l'autre.

6. Broche articulée (3) selon la revendication 4 ou 5, **caractérisée en ce que** la tension du patin (20, 26) peut être réglée par rapport au profil (25, 31) de l'évidement (5), via un moyen de réglage qui règle la distance des deux corps de glissement (21, 22 ; 27, 28) l'un par rapport à l'autre, en particulier via un boulon de réglage (15).

7. Patin (20, 26) pour sa mise en oeuvre dans une broche articulée (3) selon l'une quelconque des revendications 1 à 6.
